# EUROPÄISCHE PATENTSCHRIFT

(11) **EP 0 887 657 B1**
(45) Veröffentlichungstag und Bekanntmachung des Hinweises auf die Patenterteilung: **30.07.2003**
(21) Anmeldenummer: 98111121.4
(22) Anmeldetag: 17.06.1998
(51) Int. Cl.: G01S 15/87, G01S 7/52, G01S 7/521, G01S 15/89, G01S 7/526, G10K 11/18

(54) **Verfahren zum horizontalen Ausrichten der Empfangsebene eines Aktivsonars**
Process for horizontally aligning the receiving plane of an active sonar
Procédé pour aligner horizontalement le plan de réception d'un sonar actif

(30) Priorität: 25.06.1997 DE 19726999
(43) Veröffentlichungstag der Anmeldung: 30.12.1998
(73) Patentinhaber: STN ATLAS Elektronik GmbH, 28305 Bremen (DE)
(72) Erfinder: Leuschner, Hanns-W., 22880 Wedel (DE)
(74) Vertreter: Thul, Hermann, Dipl.-Phys.

(56) Entgegenhaltungen:
- DE-C- 4 327 841
- FR-A- 2 381 282
- GB-A- 2 105 545
- US-A- 3 738 270

## Beschreibung

Die Erfindung betrifft ein Verfahren zum horizontalen Ausrichten der Empfangsebene eines Aktivsonars der im Oberbegriff des Anspruchs 1 definierten Gattung.

Luftverbringbare Unterwasserlaufkörper zur Bekämpfung vom U-Booten, z.B. Torpedos, insgesamt als Effektoren bezeichnet, sind mit einem als Seitensichtsonar oder Sidelooking-Sonar arbeitenden Aktivsonar ausgerüstet, mit dem in der nach Eintauchen des Effektors ins Wasser sich anschließenden Sinkphase des Effektors eine Zielsuche und -ortung durchgeführt wird. Das Sidelooking-Sonar, das mit mindestens einem sog. Suchbeam mit kleinem vertikalen Öffnungswinkel die Wasserumgebung abscannt, vermag die Position eines aufgefaßten Ziels durch den azimutalen Peilwinkel und die Entfernung des Ziels zu bestimmen. Um auch die vertikale Lagekomponente des Ziels zu erfassen, wird während der Sinkphase des Effektors dessen Tauchtiefe fortlaufend gemessen und die im Moment der Zielauffassung gemessene Tauchtiefe zur Bestimmung der vertikalen Lagekomponente des Ziels herangezogen. Sobald ein Ziel aufgefaßt worden ist, geht der Effektor in eine Zielverfolgungsphase über, wobei ein an der Frontseite des Effektors angeordnetes Aktivsonar mit zur Körperachse fluchtender Empfangsrichtung, auch Front- oder Zielverfolgungssonar genannt, die Führung des Effektors hin zum Ziel übernimmt.

Für eine genaue Positionsbestimmung des Ziels durch das Sidelooking-Sonar ist es erforderlich, daß der Effektor in der Sinkphase eine lotrechte Sinkbahn einhält und seine Körperachse möglichst keine Pendelbewegungen um die Lotachse ausführt, also weder giert noch nickt, da ansonsten die Empfangsebene des Sidelooking-Sonars nicht mehr horizontal ausgerichtet ist und bei der Ortung des Ziels, insbesondere bei dessen Tiefenvermessung, erhebliche Fehler auftreten (vgl. US 3 738 270 oder DE 43 27 841 C1).

Ein bekannter Effektor dieser Art (US 3 738 270) weist zu seiner Lagestabilisierung während der Sinkphase ein Inertialsensoren und Kreisel umfassendes Lagereferenzsystem auf, das abhängig vom Nicken und/oder Gieren des Effektors Drehraten um die Nick- und Gierachse erzeugt, die als Steuersignale einem Autopiloten zum Stabilisieren des Effektor in seiner Lotbahn zugeführt werden. Solche Lagereferenzsysteme sind technisch aufwendig und lassen die Herstellungskosten des Effektors nicht unerheblich anwachsen.

Der Erfindung liegt die Aufgabe zugrunde, ein Verfahren der eingangs genannten Art anzugeben, mit dem die horizontale Ausrichtung der Empfangsebene eines Aktivsonars mit nur geringem technischen Aufwand möglich ist.

Die Aufgabe ist bei einem Verfahren der im Oberbegriff des Anspruchs 1 angegebenen Gattung erfindungsgemäß durch die Merkmale im Kennzeichenteil des Anspruch 1 gelöst.

Das erfindungsgemäße Verfahren hat den Vorteil, für die angestrebte horizontale Ausrichtung der Empfangsebene des Aktivsonars keine zusätzlichen Sensoren zu benötigen, sondern Informationen, die das Aktivsonar selbst liefert, für die Lageregelung zu benutzen. Der Zusatzaufwand für die Durchführung des Verfahrens beschränkt sich damit lediglich auf die Einführung von zusätzlichen Rechenroutinen für die Signalverarbeitung der Empfangssignale des Aktivsonars in dem ohnehin für die Sonarauswertung vorhandenen Rechner.

Das erfindungsgemäße Verfahren basiert auf dem Grundgedanken, daß bei exakt horizontal ausgerichteter Empfangsebene alle Empfangssektoren, auch Empfangsbeams, Empfangskeulen oder Empfangsdiagramme genannt, aufgrund ihres vertikalen Öffungswinkels die Wasseroberfläche oder den Gewässergrund in gleicher Entfernung streifen. Damit ist der zeitliche Verlauf des von der Wasseroberfäche oder dem Gewässergrund erzeugten sog. Flächennachhalls in den Empfangssignalen aller Empfangssektoren gleich. Ist jedoch die Empfangsebene nicht exakt horizontal ausgerichtet, so streifen einige Empfangssektoren die Wasseroberfläche bzw. den Gewässergrund in kürzerer Entfernung als andere, der Nachhall setzt also in diesen Empfangssektoren früher ein als in den anderen. Diese Auswirkung auf den Nachhallverlauf ist unabhängig von dem jeweiligen Nachhallmaß der Oberfläche und des Gewässergrunds. Die zeitliche Verschiebung des Nachhalls in den einzelnen Empfangssektoren gegeneinander ist damit ein Maß für die Verschwenkung der Empfangsebene des Aktivsonars aus der Horizontalen.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß alternativer Ausgestaltungen des erfindungsgemäßen Verfahrens wird der zeitliche Nachhallverlauf in der Weise ausgewertet, daß die Zeitdifferenzen zwischen den Anstiegsflanken des Nachhalls und/oder die Zeitdifferenzen zwischen den Maxima des Nachhalls in den Empfangssignalen der einzelnen Empfangssektoren gemessen oder die Differenzsignale zwischen den einzelnen Empfangssignalen der Empfangssektoren gebildet werden. Für eine exakt horizontale Ausrichtung sind dabei mindestens drei Empfangssektoren erforderlich, die vorzugsweise um gleiche Azimutwinkel zueinander versetzt ausgerichtet sind. Bei Verwendung von vier Empfangssektoren, die um gleiche Azimutwinkel gegeneinander versetzt sind, vereinfacht sich das Auswerteverfahren, da nur noch die Zeitdifferenzen bzw. die Differenzsignale aus einander diametral gegenüberliegenden Empfangssektoren gebildet werden müssen, wobei aus dem einen Empfangssektorenpaar der Lagefehler in der Nickachse und aus dem anderen Empfangssektorenpaar der Lagefehler in der Gierachse ermittelt werden kann.

Um den Lagefehler in die richtige Richtung zu korrigieren ist es erforderlich, festzustellen, ob die zeitliche Nachhallverschiebung in den Empfangssignalen der verschiedenen Empfangssektoren aus dem von der Wasseroberfläche oder vom Gewässergrund erzeugten Flächennachhall herrührt; denn die Richtung der Korrektur wechselt mit der der halben Wassertiefe entsprechenden Tauchtiefe des Aktivsonars. Eine weitere Ausgestaltung des erfindungsgemäßen Verfahrens sieht daher vor, aus einer Vorabinformation über die Wassertiefe und der Einsatztiefe des Aktivsonars das Vorzeichen für die Lagekorrektur zu bestimmen. Die Einsatztiefe des Aktivsonars kann mit einer einfachen Druckmeßdose bestimmt oder korrigiert werden.

Das erfindungsgemäße Verfahren wird mit wesentlichen Vorteilen bei luftverbringbaren Unterwasserlaufkörpern, wie Aufklärungsdrohnen, sowie Torpedos oder anderen Effektoren eingesetzt, die nach Eintauchen in die Wasseroberfläche zunächst mit Sinkgeschwindigkeit zum Gewässergrund abtauchen und dabei mit dem Aktivsonar die Wasserumgebung nach Zielen absuchen, wobei Sende- und Empfangsrichtung des Aktivsonars rechtwinklig zur Achse des Unterwasserlaufkörpers, also radial, ausgerichtet sind. Die Lagekorrektur der Empfangsebene des Aktivsonars infolge Gieren oder Nicken des Unterwasserlaufkörpers während der Sinkphase erfolgt durch Ansteuerung der Rudereinrichtung des Unterwasserlaufkörpers mit aus der Auswertung der Nachhallverschiebung abgeleiteten Regelgrößen, aus denen wiederum Stellgrößen für die Rudereinrichtung abgeleitet werden.

Ein luftverbringbarer Unterwasserlaufkörper, der eine Signalverarbeitungseinheit aufweist, in welcher das erfindungsgemäße Verfahren implementiert ist, ist im Patentanspruch 14 angegeben. Die mit zwei rechtwinklig zueinander ausgerichteten Ruderblättern ausgestattete Rudereinrichtung am Heck des Unterwasserlaufkörpers weist zwei Ruderstellvorrichtungen auf, denen jeweils ein Regler zugeordnet ist. Die Signalverarbeitungseinheit generiert entsprechend dem erfindungsgemäßen Verfahren zwei Regelgrößen, die jeweils einen der mit einem gleichen Sollwert beaufschlagten Regler zugeführt werden. Aus der Regelabweichung der Regelgröße generiert der Regler eine Stellgröße, die über die Ruderstellvorrichtung eine entsprechende Einstellung des zugeordneten Ruderblattes bewirkt, bis die Regelabweichung wieder zu Null geworden ist. Das Vorzeichen der Stellgröße wird dabei von einem digitalen Signal bestimmt, das bezogen auf die halbe Wassertiefe einen von zwei digitalen Werten annimmt. Die momentane Wassertiefe des Unterwasserlaufkörpers wird vorzugsweise mit einer Druckmeßdose bestimmt, und mittels eines fortlaufend den Abstand zum Gewässergrund messenden Echolots kann festgestellt werden, ob der Unterwasserlaufkörper sich ober- oder unterhalb der halben Wassertiefe befindet. Als Echolot wird dabei ein an der Front des Unterwasserlaufkörpers angeordnetes Aktivsonar mit zur Körperachse fluchtender Sende- und Empfangssrichtung auch Front- oder Zielverfolgungssonar genannt, verwendet, das der Unterwasserlaufkörper zur Steuerung des Ziellaufs besitzt und während der Sinkphase des Unterwasserlaufkörpers die Echolotung vornimmt.

Das erfindungsgemäße Verfahren ist anhand eines in der Zeichnung dargestellten, mit einem Aktivsonar ausgerüsteten Unterwasserlaufkörpers im folgenden näher beschrieben. Es zeigen jeweils in schematischer Darstellung:
- Fig.1: eine perspektivische Darstellung eines mit einem Aktivsonar ausgestatteten, luftverbringbaren Unterwasserlaufkörpers während der Sinkphase nach Eintauchen in die Wasseroberfläche,
- Fig.2: ein Diagramm des zeitlichen Pegelverlaufs des Nachhalls in zwei einander gegenüberliegenden Empfangssektoren des Aktivsonars in Fig.1,
- Fig.3: einen Querschnitt des Unterwasserlaufkörpers in Fig.1 mit schematisch eingezeichneten Funktionsblöcken,
- Fig.4: ein Blockschaltbild des Funktionsblocks "Regelelektronik" in Fig.3.

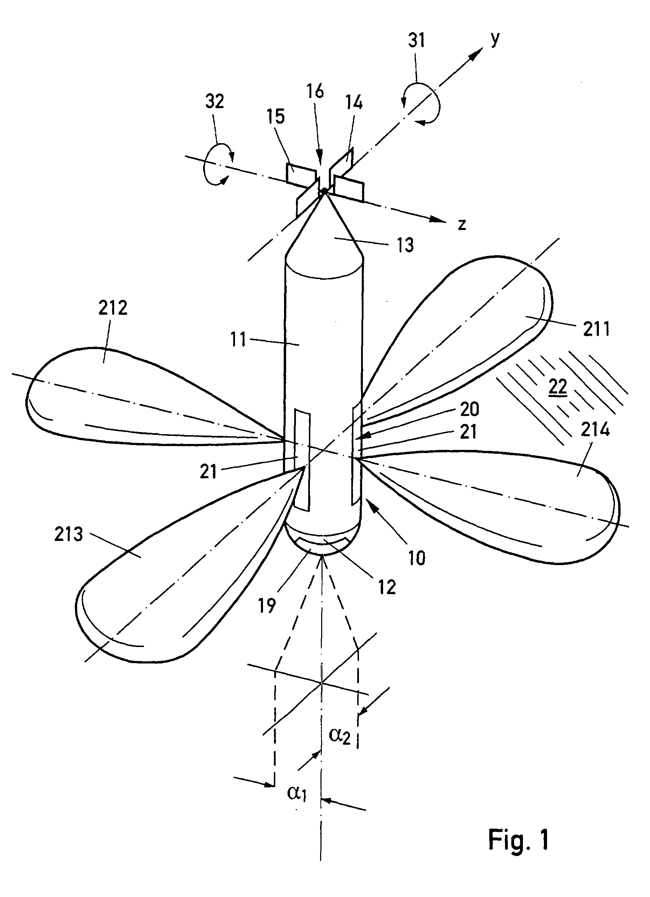

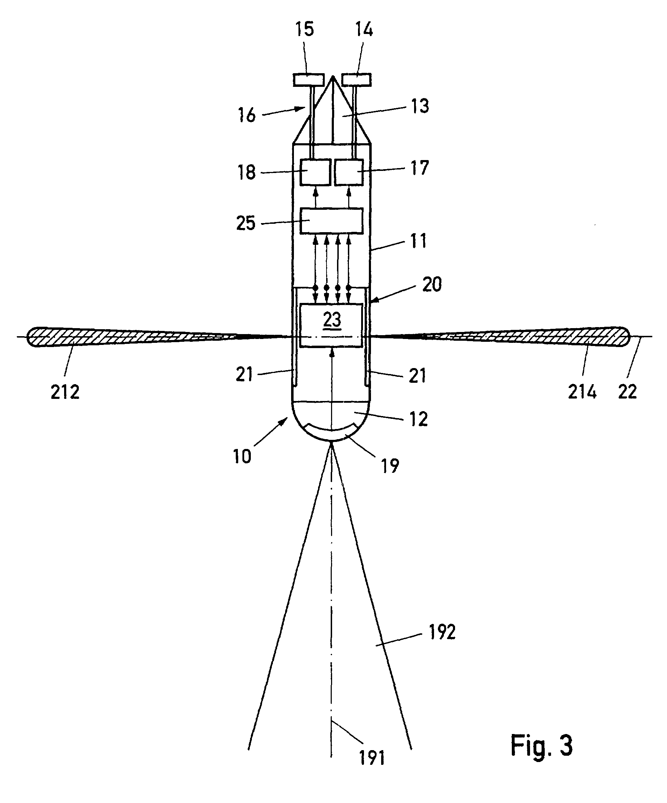

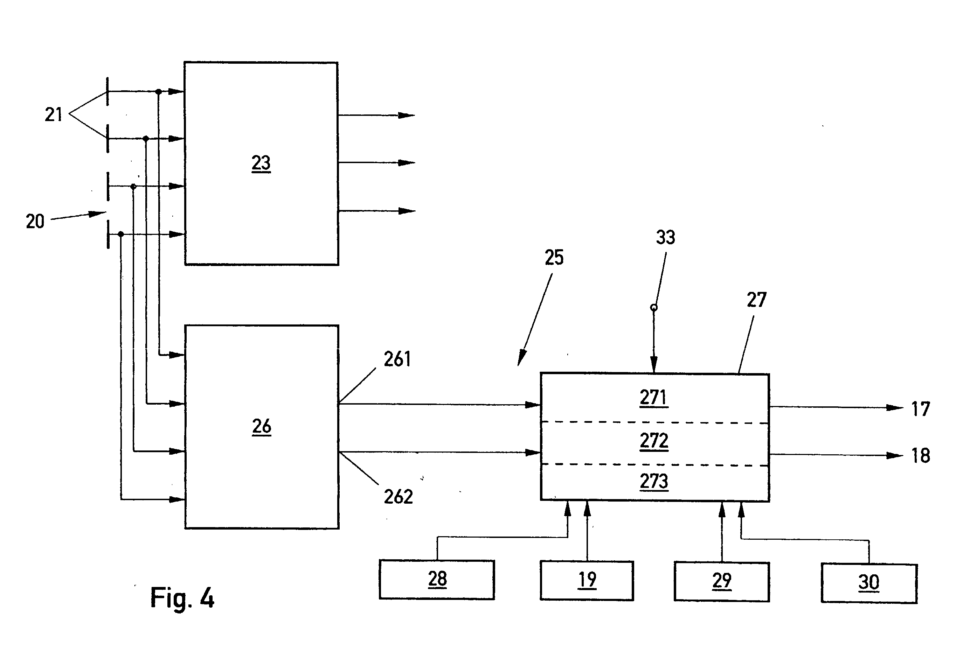

Der in Fig.1 perspektivisch und in Fig.3 im Längsschnitt dargestellte Unterwasserlaufkörper 10, z.B. ein Torpedo zur Bekämpfung von U-Booten, weist ein langgestrecktes, hohlzylindrisches Gehäuse 11 auf, dessen vorderes Stirnende von einer Kappe 12 und dessen hinteres Stirnende von einem kegelförmigen Heck 13 abgeschlossen ist. Am Heck 13 sind zwei rechtwinklig zueinander ausgerichtete Ruderblätter 14,15 einer insgesamt mit 16 bezeichneten Rudereinrichtung angeordnet, die noch zwei Ruderstellvorrichtungen 17,18, für jeweils eines der Ruderblätter 14,15 aufweist. Bei Ansteuerung durch seine zugeordnete Ruderstellvorrichtung 17 bzw. 18 führt das Ruderblatt 14 eine Schwenkung um eine in Fig.1 mit y bezeichnete Nickachse und das Ruderblatt 15 um eine in Fig.1 mit z bezeichnete Gierachse aus. In der Kappe 12 ist ein Front- oder Zielverfolgungssonar 19 untergebracht, dessen Sende- und Empfangsrichtung 191 mit der Körperachse des Unterwasserlaufkörpers 10 fluchtet und dessen Empfangsbeam, Empfangskeule oder Empfangssektor in Fig.3 mit 192 angedeutet ist. Der Unterwasserlaufkörper 10 besitzt außerdem ein Seitensicht- oder Sidelooking-Sonar 20 das als Aktivsonar über eine Sendeeinrichtung und eine Empfangseinrichtung verfügt, wobei in Fig.1 und 3 nur die Empfangseinrichtung dargestellt ist. Die Empfangseinrichtung weist im Ausführungsbeispiel der Fig. 1 und 3 vier Gruppen 21 von Empfangswandlern auf, die um gleiche Umfangswinkel versetzt am zylinderförmigen Gehäuse 11 angeordnet sind. Jede Wandlergruppe 21 besitzt ein Richtdiagramm, aufgrund dessen sie nur Schall aus einem definierten räumlichen Empfangssektor empfangen kann. Diese Empfangssektoren sind in Fig.1 und 3 mit 211-214 bezeichnet. Jeder Empfangssektor 211-214 weist einen relativ kleinen Öffnungswinkel in Elevation und einen recht großen Öffnungswinkel im Azimut auf. Der Öffungswinkel im Azimut ist dabei so groß bemessen, daß die Empfangssektoren 211-214 sich einander im Azimut überlappen, was aus Gründen der Übersichtlichkeit in Fig.1 nicht dargestellt und lediglich für die Zielsuche und -ortung erforderlich ist. Die Achsen der Empfangssektoren 211-214, die die Achsen der größten akustischen Empfindlichkeit der Wandlergruppen 21 darstellen, spannen die sog. Empfangsebene 22 auf, die rechtwinklig, bzw. radial zur Körperachse des Unterwasserlaufkörpers 10 ausgerichtet ist. Die Empfangssektoren 211-214 werden in der Literatur unterschiedlich auch Empfangskeulen oder Empfangsbeams oder Empfangsdiagramme bezeichnet. Der nicht dargestellte Sendeteil des Seitensichtsonars 20 besitzt ebenfalls mehrere Senderwandlergruppen, die in gleicher Weise Schallkeulen aussenden, die einen kleinen vertikalen und einen großen azimutalen Öffnungswinkel besitzen und sich in der Azimutebene einander überlappen. In gleicher Weise könnte die Sendeeinrichtung auch über eine rundum sendende Sendeantenne verfügen, so daß in beiden Fällen die Wasserumgebung über 360° Azimutwinkel beschallt wird. Die vier Gruppen von Empfangswandlern 21 sind an eine Sonarelektronik 23 angeschlossen, die aus in den einzelnen Empfangssektoren 211-214 von den Wandlergruppen 21 aufgenommenen Empfangssignalen von Zielen herrührende Echosignale detektiert und die Position der Ziele durch einen azimutalen Peilwinkel und die Entfernung zwischen Unterwasserlaufkörper 10 und Ziel bestimmt. Aufgrund des extrem kleinen vertikalen Öffnungswinkel der Empfangssektoren 211-214 entspricht die Lagekomponente der detektierten Ziele in Elevation der momentanen Tauchtiefe des Unterwasserlaufkörpers 10 im Moment der Zielauffassung, die beispielsweise mit einer Druckmeßdose 20 (Fig.4) festgestellt werden kann.

Der luftverbringbare Unterwasserlaufkörper 10 wird von einem Oberflächenschiff aus in einer ballistischen Kurve verschossen oder von einem Luftfahrzeug aus abgeworfen, taucht im wesentlichen senkrecht in die Wasseroberfläche ein und sinkt nach unten zum Gewässerboden oder Gewässergrund. Während der Sinkphase ist das Seitensichtsonar 20 aktiviert und tastet mit seinen flachen, scheibenförmigen Sende- und Empfangskeulen die Umgebung ab. Zugleich wird durch Echolotung mittels des Zielverfolgungssonars 19 der Abstand zum Gewässerboden fortlaufend vermessen und mit einer Druckmeßdose 28 die momentane Isttiefe des Unterwasserlaufkörpers 10 bestimmt und in der Sonarelektronik 23 ein aufgefaßtes Ziel sowohl hinsichtlich seiner Azimutwinkellage als auch hinsichtlich seiner Tauchtiefe erfaßt. Zusätzlich kann die Sonarelektronik 23 noch die Radialentfernung zum Ziel errechnen. Sobald der Unterwasserlaufkörper 10 ein Ziel geortet hat, geht er in bekannter Weise aus der Sinkphase in die Zielverfolgungsphase über, wobei das zuvor als Echolot benutzte Zielverfolgungssonar nunmehr den Unterwasserlaufkörper 10 hin zum Ziel führt. Das Seitensichtsonar 20 mißt nunmehr den Abstand zum Gewässerboden und/oder zur Wasseroberfläche. Diese Informationen zusammen mit den während der Sinkphase erkannten und gespeicherten Höhen- und Winkelinformationen des Ziels leiten den Unterwasserlaufkörper 10 zum Ziel, wobei der Unterwasserlaufkörper 10 zur Zielvernichtung noch mit einer Sprengladung, die im Gehäuse 11 untergebracht ist, ausgerüstet sein kann.

Für die exakte Zielortung während der Sinkphase des Unterwasserlaufkörpers 10 durch das Seitensichtsonar 20 ist es von wesentlicher Bedeutung, daß der Unterwasserlaufkörper 10 mit seiner Körperachse immer exakt lotrecht ausgerichtet ist, so daß die Empfangsebene 22 des Seitensichtsonars 20 immer exakt in der Horizontalebene liegt. Um dieses sicherzustellen, ist eine insgesamt mit 25 bezeichnete Regelelektronik vorgesehen, die eingangsseitig - ebenfalls wie die Sonarelektronik 23 - an den Empfangswandlern der vier Wandlergruppen 21 angeschlossen ist und ausgangsseitig mit den beiden Ruderstellvorrichtungen 17,18 verbunden ist. Die Regelelektronik 25 ist in Fig.4 im Blockschaltbild, detaillierter dargestellt. Die Regelelektronik 25 weist eine an den Ausgängen der vier Wandlergruppen 21 angeschlossene Signalverarbeitungseinheit 26 sowie eine Regeleinheit 27 mit zwei Reglern 271,272 auf. An der Regeleinheit 27 ist eine Druckmeßdose 28, der Ausgang des während der Sinkphase des Unterwasserlaufkörpers 10 als Echolot arbeitenden Zielverfolgungssonars 18 und ggf. ein Kreiselsystem 29, sowie eine Voreinstellung 30 angeschlossen. Jeweils ein Regler 271 bzw. 272 ist einer Ruderstellvorrichtung 17 bzw. 18 zugeordnet und liefert eine Stellgröße an die Ruderstellvorrichtung 17 bzw. 18, die diese in eine entsprechende Auslenkung der Ruderblätter 14 bzw. 15 um die Nick- bzw. Gierachse y bzw. z (Fig.1) umsetzen. Die Schwenkbeweglichkeit der Ruderblätter 14 und 15 ist in Fig.1 mit Doppelpfeilen 31 und 32 symbolisiert. Die Signalverarbeitungseinheit 26 weist zwei Ausgänge 261,262 auf, von denen jeweils einer an einen der Regler 271,272 der Regeleinheit 27 gelegt ist.

Mittels der Regelelektronik 25 wird zur horizontalen Ausrichtung der Empfangsebene 22 des Seitensichtsonars 20 folgendes Verfahren durchgeführt:

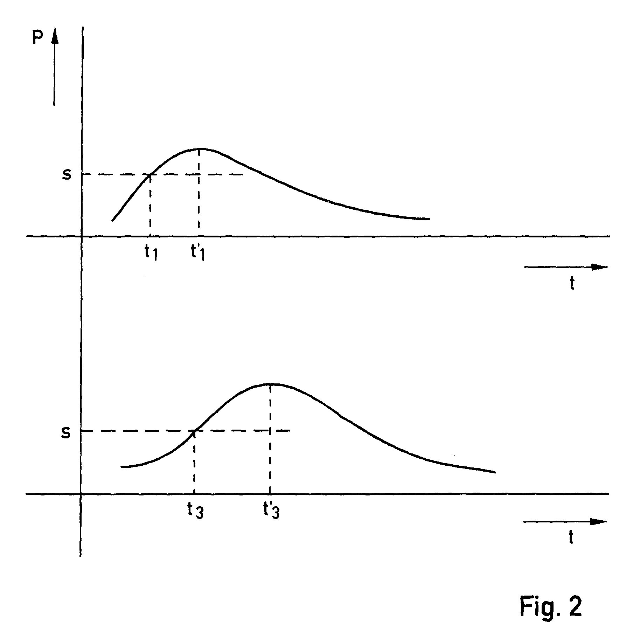

Der zeitliche Nachhallverlauf in den Empfangssignalen aus den vier Empfangssektoren 211-214 wird in der Signalverarbeitungseinheit 26 ausgewertet und über die Reglereinheit 27 zur Lagekorrektur der Empfangsebene 22 benutzt. Ein Beispiel für einen möglichen Nachhallverlauf in den beiden gegenüberliegenden Empfangssektoren 211 und 213 (Fig.1) ist in Fig.2 dargestellt, wobei in der Ordinate der Pegel des Nachhalls und in der Abszisse die Zeit dargestellt ist. Ist beispielsweise der Unterwasserlaufkörper 10 um die Gierachse z in Fig.1 um den Winkel α₂ gedreht und befindet sich der Unterwasserlaufkörper 10 oberhalb der halben Wassertiefe so wird der Empfangssektor 211 die Wasseroberfläche in einer kürzeren Distanz vom Unterwasserlaufkörper 10 streifen als der Empfangssektor 213. Wie in Fig.2 dargestellt ist, tritt damit der Nachhall im Empfangssektor 211 früher auf als im Empfangssektor 213. Diese zeitliche Verschiebung des Nachhalls ist damit ein Maß für den Lagefehler der Empfangsebene 22 in der Gierachse z und wird in der Regelelektronik 25 zur Lagekorrektur entsprechend ausgewertet. Das gleiche gilt für die Empfangssektoren 212 und 214, wenn der Unterwasserlaufkörper 10 um den Winkel α₁ um die Nickachse y gedreht ist. Dann tritt der Nachhall in dem Empfangssektor 212 früher auf als in dem Empfangssektor 214. Diese zeitliche Verschiebung des Nachhall wird von der Regelelektronik 25 in gleicher Weise zur Lagekorrektur der Empfangsebene 22 in der Nickachse y herangezogen.

Die zeitliche Verschiebung des Nachhalls kann nunmehr in verschiedener Weise erfaßt werden. Wie in Fig.2 illustriert ist, wird die Zeitdifferenz zwischen den Anstiegsflanken des Nachhalls in den Empfangssignalen der einander gegenüberliegenden Empfangssektoren 211 und 213 bzw. 212 und 214 festgestellt, also gemäß Fig.2 die Zeitdifferenz zwischen t₃ und t₁ gemessen. Zur Bestimmung der Zeitpunkte t₃ und t₁ wird jedes Empfangssignal mit einer Schwelle S verglichen und der Zeitpunkt der Schwellenüberschreitung im Nachhallverlauf festgestellt. Alternativ können auch die Maxima der Nachhallverläufe in den Empfangssignalen in den Empfangssektoren aufgesucht und die zeitliche Verschiebung dieser Maxima in gegenüberliegenden Empfangssektoren 211, 213 bzw. 212, 214 gemessen werden. Die Zeitdifferenz wäre in diesem Fall gemäß Fig.2 t'₃-t'₁. Weiter ist es möglich, beide Zeitdifferenzen, also t₃-t₁ und t'₃-t'₁, zu messen und daraus eine gewichtete Zeitdifferenz zu bilden. Als vierte Alternative ist es möglich, aus den Empfangssignalen gegenüberliegender Empfangssektoren 211, 213 bzw. 212, 214 die Differenzsignale zu bilden, diese zu integrieren und die integrierten Differenzsignale zur Lagekorrektur der Empfangsebene 22 zu verwenden.

Je nach ausgewähltem Verfahren liegt an den Ausgängen 261 und 262 der Signalverarbeitungseinheit 26 als Regelgröße die Zeitdifferenz t₃-t₁ bzw. t₄-t₂ an oder die integrierten Differenzsignale der Empfangssignale aus den Empfangssektoren 211 und 213 bzw. 212 und 214, die ebenfalls den Zeitdifferenzen entsprechende Regelgrößen darstellen. Die am Ausgang 261 anstehende Regelgröße wird dem Regler 271 der Regeleinheit 27 und die am Ausgang 262 anstehende Regelgröße dem Regler 272 der Regeleinheit 27 zugeführt. Die Regeleinheit 27 ist mit einem Sollwert 33 beaufschlagt, die der exakten horizontalen Ausrichtung der Empfangsebene 22 des Seitensichtsonars 20 entspricht. Jeder Regler 271, 272 erzeugt nun aufgrund der Regelabweichung eine Stellgröße, deren Betrag und Vorzeichen so festgelegt ist, daß die Regelabweichung der Regelgröße im Regelkreis wieder beseitigt wird. Diese Stellgrößen werden an die Rudereinrichtung 16 und dort an die beiden Ruderstellvorrichtungen, 17,18 gegeben, die eine Schwenkung der Ruderblätter 14 und 15 derart bewirken, daß die Schwenkwinkel α₁ und α₂ der Körperachse des Unterwasserlaufkörpers 10 gegenüber dem Lot wieder zu Null gemacht werden.

Mittels der Blöcke 28,19 und/oder 30 wird in der Regeleinheit 27 das Vorzeichen der Stellgrößen bestimmt. Das Vorzeichen wird als digitales Relativtiefensignal von einem Rechenglied 273 der Regeleinheit 27 an die beiden Regler 271,272 gelegt, wobei das Relativtiefensignal aus den Ausgangssignalen der Druckmeßdose 28 und des als Echolot arbeitenden Zielverfolgungssonars 19 generiert wird, das bei Erreichen der halben Wassertiefe durch den Unterwasserlaufkörper 10 seinen Wert ändert. Die Druckmeßdose 28 liefert dabei die momentane Isttiefe des Unterwasserlaufkörpers 10 und das Zielverfolgungssonar 19 den momentanen Abstand des Unterwasserlaufkörper 10 vom Gewässergrund, so daß aufgrund dieser beiden Signale von dem Rechenglied 273 beispielsweise der Wert "1" ausgegeben wird, wenn sich der Unterwasserlaufkörper 10 oberhalb der halben Wassertiefe befindet und der Wert "0" oder "-1" ausgegeben wird, wenn sich der Unterwasserlaufkörper 10 unterhalb der halben Wassertiefe befindet. Im einfachsten Fall kann das Rechenglied 273 ein Komparator sein, dem das Abstandssignal aus der Echolotung des Zielverfolgungssonars 19 und das Tiefensignal der Druckmeßdose 28 zugeführt ist und an dessen Ausgang der Wert "1" ansteht, solange das Tiefensignal kleiner ist als das Abstandssignal und der Wert "0" oder "1" ansteht, sobald das Tiefensignal größer wird als das Abstandssignal. Ist die Wassertiefe im Einsatzgebiet des Unterwasserlaufkörpers 10 bekannt und wird diese mit Hilfe der Voreinstellung 30 dem Rechenglied 273 zugeführt, so kann entweder auf die Druckmeßdose 28 oder auf die Echolotmessung des Zielverfolgungssonar 19 verzichtet werden, da dann einer der von diesen Sensoren gelieferter Meßwerte ausreicht in Verbindung mit der bekannten Wassertiefe das Relativtiefensignal zu bestimmen. Bei Kenntnis des Eintauchzeitpunktes und der Sinkgeschwindigkeit des Unterwasserlaufkörpers 10, die in der Voreinstellung 30 abgelegt werden, kann sowohl auf die Druckmeßdose 28 als auch auf die Echolotmessung des Zielverfolgungssonars 19 verzichtet werden.

Der beschriebene Regelvorgang setzt bereits kurz nach Eintauchen des Unterwasserlaufkörpers 10 ins Wasser ab einer Wassertiefe von ca. 5 m ein. Um die Datenrate für den Regelvorgang zu erhöhen, ist die Lotperiode des Seitensichtsonars 20, d.h. das Zeitintervall zwischen dem Aussenden aufeinanderfolgender Sendeimpulse, zu Beginn der Suchphase des Unterwasserlaufkörpers 10 klein gewählt und wird ab einer bestimmten Mindesttauchtiefe vergrößert. Als Maß für die Mindesttauchtiefe wird dabei das erste Auftreten von Nachhall in einem der Empfangssektoren 211-214 gewertet.

Zur Vorausrichtung des Unterwasserlaufkörpers 10 direkt nach Eintauchen und zur Stützung der Regelung bei einer der halben Wassertiefe entsprechenden Tauchtiefe des Unterwasserlaufkörpers 10 kann die Lageinformation des Kreiselsystems 29 mit üblicher Genauigkeit herangezogen werden.

Die Erfindung ist nicht auf das vorstehend beschriebenen Ausführungsbeispiel beschränkt. So ist die Anzahl der vorhandenen Empfangssektoren 211-214 nicht auf vier festgelegt. Zur Ausrichtung der Empfangsebenen 22 des Seitensichtsonars 20 bzw. der vertikalen Ausrichtung des Unterwasserlaufkörpers 10 kann eine beliebige Anzahl von Empfangssektoren verwendet werden. Mindestens müssen drei Empfangssektoren vorhanden sein, die dann um 120° gegeneinander im Azimut versetzt angeordnet sind. In diesem Fall ergeben sich die beiden Regelgrößen für Nickachse y und Gierachse z aus den zwischen dem ersten und zweiten Empfangssektor gemessenen Zeitdifferenzen bzw. aus der Addition der zwischen dem dritten und dem zweiten sowie dem dritten und dem ersten Empfangssektor gemessenen Zeitdifferenzen bei Berücksichtigung von entsprechenden Faktoren. Die im Ausführungsbeispiel beschriebene Ausführung des Seitensichtsonars 20 mit vier Empfangssektoren 211-214, die sich jeweils paarweise diametral am Unterwasserlaufkörper 10, Gegenüberliegen hat den Vorteil, daß nur Zeitdifferenzen zwischen den einander gegenüberliegenden Empfangssektoren 211, 213 bzw. 212, 214 eines Sektorenpaars bestimmt werden müssen und sich dadurch wesentliche Vereinfachungen für die Signalverarbeitung ergeben.

## Patentansprüche

1. Verfahren zum horizontalen Ausrichten der Empfangsebene (22) eines Aktivsonars (20), das Schall ins Wasser aussendet und den aus dem Wasser zurückgestreuten Sendeschall über mindestens drei, in der Empfangsebene (22) um gleiche Umfangswinkel zueinander versetzt angeordnete Empfangssektoren (211-214) mit kleinem vertikalen Öffnungswinkel empfängt, **dadurch gekennzeichnet, daß** der zeitliche Nachhallverlauf in den Empfangssignalen aus den mindestens drei Empfangssektoren (211-214) zur Lagekorrektur der Empfangsebene (22) herangezogen wird und daß ein Vorzeichen für die Lagekorrektur der Empfangsebene (22) aus der Relation der momentanen Isttiefe des Aktivsonars (20) zur gesamten Wassertiefe bestimmt wird.

2. Verfahren nach Anspruch 1, **dadurch gekennzeichnet, daß** die Zeitdifferenzen (t₃-t₁) zwischen den Anstiegsflanken des Nachhalls in den einzelnen Empfangssignalen gemessen und als Maß für den Lagefehler der Empfangsebene (22) ausgewertet werden.

3. Verfahren nach Anspruch 2, **dadurch gekennzeichnet, daß** als Zeitdifferenzen (t₃-t₁) zwischen den Anstiegsflanken die Differenzen zwischen den Zeitpunkten (t₁,t₃) der Überschreitung einer gleichen Schwelle (S) durch den Nachhallverlauf in den einzelnen Empfangssignalen definiert werden.

4. Verfahren nach Anspruch 1, **dadurch gekennzeichnet, daß** die Zeitdifferenzen (t'₃-t'₁) zwischen den Maxima des Nachhalls in den einzelnen Empfangssignalen gemessen und als Maß für den Lagefehler der Empfangsebene (22) ausgewertet werden.

5. Verfahren nach Anspruch 1, **dadurch gekennzeichnet, daß** die Differenzsignale zwischen den Empfangssignalen gebildet und die integrierten Differenzsignale als Maß für den Lagefehler der Empfangsebene (22) ausgewertet werden.

6. Verfahren nach einem der Ansprüche 2 bis 5, **dadurch gekennzeichnet, daß** aus dem Maß für den Lagefehler der Empfangsebene (22) zwei Regelgrößen bestimmt und einer eine Schwenkung der Empfangsebene (22) um jeweils eine von zwei in der Empfangsebene (22) orthogonalen Achsen (y,z) bewirkenden Regeleinheit (27) zugeführt werden.

7. Verfahren nach Anspruch 6, **dadurch gekennzeichnet, daß** vier um gleiche Winkel in der Empfangsebene (22) zueinander versetzte Empfangssektoren (211-214) verwendet und die beiden Regelgrößen aus jeweils zwei Empfangssignalen von diametralen Empfangssektoren (211,213 bzw. 212,214 abgeleitet werden.

8. Verfahren nach einem der Ansprüche 1 bis 7, **gekennzeichnet durch** seine Verwendung bei einem luftverbringbaren Unterwasserlaufkörper (10) mit einer Rudereinrichtung (16), der nach Eintauchen ins Wasser mit Sinkgeschwindigkeit zum Gewässergrund abtaucht und ein Aktivsonar (20) besitzt, dessen Empfangsebene (22) rechtwinklig zur Körperachse ausgerichtet ist, indem die Lagekorrektur der Empfangsebene (22) des Aktivsonars (20) **durch** Ansteuerung der Rudereinrichtung (16) erfolgt.

9. Verfahren nach Anspruch 8, **dadurch gekennzeichnet, daß** die Rudereinrichtung (16) zwei Ruderstellvorrichtungen (17,18) für zwei rechtwinklig zueinander ausgerichtete Ruderblätter (14,15) aufweist und daß jeder Ruderstellvorrichtung (17,18) eine aus der Regelabweichung der beiden Regelgrößen abgeleitete Stellgröße zugeführt wird.

10. Verfahren nach Anspruch 8 oder 9, **dadurch gekennzeichnet, daß** die Lotperiode des Aktivsonars (29) zu Beginn der Sinkphase des Unterwasserlaufkörpers (10) klein gewühlt und ab einer vorgegebenen Mindesttauchtiefe vergrößert wird.

11. Verfahren nach Anspruch 10, **dadurch gekennzeichnet**, das die Mindesttauchtiefe durch das erste Auftreten von Flächennachhall im Empfangssignal eines der Empfangssektoren (211-214) festgelegt wird.

12. Luftverbringbarer Unterwasserlaufkörper, der mit Eintauchen ins Wasser eine Sinkphase mit im wesentlich lotrecht ausgerichteter Körperachse durchläuft, mit einer heckseitigen Rudereinrichtung (16) und mit einem während der Sinkphase Schall ins Wasser aussendenden Aktivsonar (20), das mehrere in einer rechtwinklig zur Körperachse ausgerichteten Ebene (22) aufgespannte, zueinander um gleiche Umfangswinkel versetzte Empfangssektoren (211-214) mit kleinem vertikalen Öffnungswinkel für den aus dem Wasser zurückgestreuten Sendeschall aufweist, **gekennzeichnet, durch** eine Regelelektronik (25) zur Durchführung des Verfahrens nach einem der Ansprüche 1-7.

13. Unterwasserlaufkörper nach Anspruch 12, **dadurch gekennzeichnet, daß** die Rudereinrichtung (16) zwei Ruderstellvorrichtungen (17,18) für zwei rechtwinklig zueinander ausgerichtete Ruderblätter (14,15) ausweist, daß die Regelelektronik (25) eine Signalverarbeitungseinheit (24), die aus den Empfangssignalen der Empfangssektoren (211-214) zwei, Regelgößen generiert, und eine Regeleinheit (27) mit zwei jeweils einer Ruderstellvorrichtung (17,18) zugeordneten Reglern (271,272) aufweist, die jeweils eingangsseitig mit einer der Regelgößen und einem Sollwert für die exakte Ausrichtung der Empfangsebene (22) beaufschlagt sind und jeweils eine die Regelabweichung der Regelgröße beseitigende Stellgröße für die zugeordnete Ruderstellvorrichtung (17 bzw. 18) generiert.

14. Unterwasserlaufkörper nach Anspruch 13, **dadurch gekennzeichnet, daß** jedem Regler (271,271) ein die Relation zwischen momentaner Tauchtiefe des Unterwasserlaufkörpers (10) und der Gesamttiefe des Gewässers erfassendes digitales Relativtiefensignal zugeführt ist, das bei Erreichen der halben Wassertiefe durch den Unterwasserlaufkörper (10) sein Vorzeichen oder seinen Betrag ändert, und daß jeder Regler (271,272) mit dem digitalen Relativtiefensignal das Vorzeichen der Stellgröße bestimmt.

15. Unterwasserlaufkörper nach Anspruch 14, **dadurch gekennzeichnet, daß** an der Frontseite des Unterwasserlaufkörpers (10) ein Aktivsonar (19) mit einer mit der Körperachse fluchtenden Sende- und Empfangsrichtung (191) angeordnet ist, daß das Aktivsonar (19) während der Sinkphase des Unterwasserlaufkörpers (10) fortlaufend Echolotungen zum Gewässerboden durchführt und den momentanen Abstand des Unterwasserlaufkörpers (10) vom Gewässergrund bestimmt, daß eine die momentane Tiefe des Unterwasserlaufkörpers (10) messende Tiefenmeßvorrichtung, z.B. Druckmeßdose (28), vorgesehen ist und daß das Abstandssignal des lotenden Aktivsonars (19) und das Tiefensignal der Tiefenmeßvorrichtung (28) einem Rechenglied (273), vorzugsweise einem Komparator, zugeführt sind, an dessen Ausgang das digitale Relativtiefensignal abnehmbar ist.

## Claims

1. Method for horizontal alignment of the receiving plane (22) of an active sonar (20) which transmits sound into the water and receives the transmitted sound, scattered back from the water, via at least three receiving sectors (211-214), which are arranged offset with respect to one another through the same circumferential angle in the receiving plane (22) and have a small vertical beam angle, **characterized in that** the reverberation profile with respect to time in the received signals from the at least three receiving sectors (211-214) is used to correct the position of the receiving plane (22), and **in that** a mathematical sign for correcting the position of the receiving plane (22) is determined from the relationship between the instantaneous actual depth of the active sonar (20) and the total water depth.

2. Method according to Claim 1, **characterized in that** the time differences (t₃-t₁) between the rising flanks of the reverberation in the individual received signals are measured, and are evaluated as a measure of the position error of the receiving plane (22).

3. Method according to Claim 2, **characterized in that** the differences between the times (t₁,t₃) at which the reverberation profile in the individual received signals exceeds the same threshold (S) are defined as the time differences (t₃-t₁) between the rising flanks.

4. Method according to Claim 1, **characterized in that** the time differences (t'₃-t'₁) between the maxima of the reverberation in the individual received signals are measured and are evaluated as a measure of the position error of the receiving plane (22).

5. Method according to Claim 1, **characterized in that** the difference signals between the received signals are formed, and the integrated difference signals are evaluated as a measure of the position error of the receiving plane (22).

6. Method according to one of Claims 2 to 5, **characterized in that** two controlled variables are determined from the measure for the position error of the receiving plane (22) and are supplied to a control unit (27) which causes the receiving plane (22) to be swivelled about in each case one of two axes (y,z) which are orthogonal in the receiving plane (22).

7. Method according to Claim 6, **characterized in that** four receiving sectors (211-214), which are offset through the same angle in the receiving plane (22) with respect to one another, are used, and the two controlled variables are derived from in each case two received signals from diametrically opposite receiving sectors (211,213 and 212,214).

8. Method according to one of Claims 1 to 7, **characterized by** the use of this method for a body (10) which moves under water and can be deployed from the air, having a steering device (16) which, after entering the water, dives down to the bottom of the waterway at a descent rate and has an active sonar (20) whose receiving plane (22) is aligned at right angles to the body axis, in that the position of the receiving plane (22) of the active sonar (20) is corrected by driving the steering device (16).

9. Method according to Claim 8, **characterized in that** the steering device (16) has two steering control apparatuses (17, 18) for two steering surface blades (14, 15) which are aligned at right angles to one another, and **in that** each steering control device (17, 18) is supplied with a manipulated variable which is derived from the control error between the two controlled variables.

10. Method according to Claim 8 or 9, **characterized in that** the echo-sounding period of the active sonar (29) is chosen to be short at the start of the sinking phase of the body (10) which runs under water, and is increased after a predetermined minimum dive depth.

11. Method according to Claim 10, **characterized in that** the minimum dive depth is defined by the first occurrence of surface reverberation in the received signal from one of the receiving sectors (211-214).

12. Body which runs under water and can be deployed from the air, which, after entering the water, passes through a sinking phase with the body axis aligned essentially vertically, having a steering device (16) at the tail and having an active sonar (20) which emits sound into the water during the sinking phase and has two or more receiving sectors (211-214), which are offset with respect to one another by the same circumferential angle and cover a plane (22) which is aligned at right angles to the body axis, which receiving sectors (211-214) have a small vertical beam angle for the transmitted sound scattered back from the water, **characterized by** control electronics (25) for carrying out the method according to one of Claims 1-7.

13. Body which runs under water according to Claim 12, **characterized in that** the steering device (16) has two steering control apparatuses (17, 18) for two steering control blades (14, 15) which are aligned at right angles to one another, **in that** the control electronics (25) have a signal processing unit (24), which generates two controlled variables from the received signals from the receiving sectors (211-214), and a control unit (27) having two controllers (271, 272) which are each associated with one steering control apparatus (17, 18), each have one of the controlled variables and a nominal value applied to their input side for exact alignment of the receiving plane (22), and each generate a manipulated variable, to correct the control error between the controlled variables, for the associated steering control apparatus (17 or 18).

14. Body which runs underwater according to Claim 13, **characterized in that** each controller (271, 272) is supplied with a digital relative depth signal which detects the relationship between the instantaneous dive depth of the body (10) which runs under water and the total depth of the waterway, and which changes its mathematical sign or its magnitude when the body (10) which runs under water reaches half the depth of the water, and **in that** each controller (271, 272) uses the digital relative depth signal to determine the mathematical sign of the manipulated variable.

15. Body which runs under water according to Claim 14, **characterized in that** an active sonar (19) with a transmitting and receiving direction (191) which is aligned with the body axis is arranged on the front face of the body (10) which runs under water, **in that** the active sonar (19) carries out echo soundings to the base of the waterway continuously during the sinking phase of the body (10) which runs under water, and determines the instantaneous distance between the body (10) which runs under water and the base of the waterway, **in that** a depth measurement apparatus which measures the instantaneous depth of the body (10) which runs under water, for example a pressure measurement sensor (28), is provided, and **in that** the distance signal from the echo-sounding active sonar (19) and the depth signal from the depth measurement apparatus (28) are supplied to a computation element (273), preferably to a comparator, at whose output the digital relative depth signal can be tapped off.

## Revendications

1. Procédé pour aligner horizontalement le plan de réception (22) d'un sonar actif (20) qui émet un son dans l'eau et qui reçoit le son émis dispersé en retour depuis l'eau par le biais d'au moins trois secteurs de réception (211-214) à faible angle d'ouverture verticale disposés de manière décalée l'un par rapport à l'autre dans le plan de réception (22) selon le même angle périphérique, **caractérisé en ce que** l'évolution dans le temps de la réverbération dans les signaux reçus des trois secteurs de réception (211-214) est utilisé pour la correction de la position du plan de réception (22) et qu'un signe est déterminé à partir de la relation entre la profondeur réelle momentanée du sonar actif (20) et la profondeur totale de l'eau pour la correction de la position du plan de réception (22).

2. Procédé selon la revendication 1, **caractérisé en ce que** les différences de durée (t₃-t₁) entre les fronts montants de la réverbération sont mesurées dans chacun des signaux reçus et interprétées en tant que mesure de l'erreur de position du plan de réception (22).

3. Procédé selon la revendication 2, **caractérisé en ce que** les différences de durée (t₃-t₁) entre les fronts montants sont définies comme étant les différences entre les moments (t₁, t₃) de dépassement d'un même seuil (S) par la courbe de réverbération dans chacun des signaux reçus individuels.

4. Procédé selon la revendication 1, **caractérisé en ce que** les différences de durée (t'₃-t'₁) entre les maximums de la réverbération sont mesurées dans chacun des signaux reçus et interprétées en tant que mesure de l'erreur de position du plan de réception (22).

5. Procédé selon la revendication 1, **caractérisé en ce que** les signaux différentiels entre les signaux reçus sont calculés et les signaux différentiels intégrés sont interprétés en tant que mesure de l'erreur de position du plan de réception (22).

6. Procédé selon l'une des revendications 2 à 5, **caractérisé en ce que** deux grandeurs de régulation sont déterminées à partir de la mesure de l'erreur de position du plan de réception (22) et sont acheminées à une unité de régulation (27) qui provoque un pivotement du plan de réception (22) à chaque fois autour d'un parmi deux axes orthogonaux (y, z) dans le plan de réception (22).

7. Procédé selon la revendication 6, **caractérisé en ce que** quatre secteurs de réception (211-214) décalés l'un par rapport à l'autre selon le même angle danns le plan de réception (22) sont utilisés et les deux grandeurs de régulation sont dérivées à chaque fois de deux signaux reçus en provenance de secteurs de réception diamétralement opposés (211, 213 ou 212, 214).

8. Procédé selon l'une des revendications 1 à 7, **caractérisé par** son utilisation avec un corps mobile sous-marin pouvant faire surface (10) muni d'un gouvernail (16) qui, après immersion dans l'eau, plonge en direction du fond de l'eau à la vitesse de descente verticale et possède un sonar actif (20) dont le plan de réception (22) est orienté perpendiculairement à l'axe du corps et dans lequel la correction de la position du plan de réception (22) du sonar actif (20) s'effectue en commandant le gouvernail (16).

9. Procédé selon la revendication 8, **caractérisé en ce que** le gouvernail (16) présente deux mécanismes de positionnement du gouvernail (17, 18) pour deux pales de gouvernail (14, 15) perpendiculaires l'une à l'autre et qu'une grandeur de commande dérivée de la déviation de réglage des deux grandeurs de régulation est acheminée à chaque mécanisme de positionnement du gouvernail (17, 18).

10. Procédé selon la revendication 8 ou 9, **caractérisé en ce que** la période d'aplomb du sonar actif (29) est choisie petite au début de la phase de plongée du corps mobile sous-marin (10) puis augmentée à partir d'une profondeur d'immersion minimale prédéfinie.

11. Procédé selon la revendication 10, **caractérisé en ce que** la profondeur d'immersion minimale est déterminée par la première apparition d'une réverbération de surface dans le signal reçu par l'un des secteurs de réception (211-214).

12. Corps mobile sous-marin pouvant faire surface qui, lors de son immersion dans l'eau, traverse une phase de descente verticale au cours de laquelle l'axe du corps est aligné de manière essentiellement verticale, muni d'un gouvernail arrière (16) et muni d'un sonar actif (20) qui émet un son dans l'eau pendant la phase de descente verticale, lequel présente plusieurs secteurs de réception (211-214) étirés à faible angle d'ouverture verticale disposés de manière décalée l'un par rapport à l'autre dans un plan de réception (22) du son émis dispersé en retour depuis l'eau dirigé perpendiculairement à l'axe du corps, **caractérisé par** un circuit électronique de régulation (25) destiné à mettre en oeuvre le procédé selon l'une des revendications 1 à 7.

13. Corps mobile sous-marin selon la revendication 12, **caractérisé en ce que** le gouvernail (16) présente deux mécanismes de positionnement du gouvernail (17, 18) pour deux pales de gouvernail (14, 15) perpendiculaires l'une à l'autre, que le circuit électronique de régulation (25) présente une unité de traitement du signal (24) qui génère des deux grandeurs de régulation à partir des signaux reçus des secteurs de réception (211-214) et une unité de régulation (27) comprenant deux régulateurs (271, 272) respectivement associés à un mécanisme de positionnement du gouvernail (17, 18) et recevant chacun à leur entrée l'une des grandeurs de régulation et une valeur de consigne pour l'alignement exact du plan de réception (22) et génère à chaque fois une grandeur de commande éliminant la déviation de réglage des grandeurs de régulation pour le mécanisme de positionnement du gouvernail (17 ou 18) associé.

14. Corps mobile sous-marin selon la revendication 13, **caractérisé en ce qu'**un signal numérique de profondeur relative comprenant la relation entre la profondeur d'immersion momentanée du corps mobile sous-marin (10) et la profondeur totale de l'eau est acheminé à chaque régulateur (271, 272), lequel signal modifie son signe ou sa valeur lorsque le corps mobile sous-marin (10) atteint la moitié de la profondeur de l'eau, et que chaque régulateur (271, 272) détermine le signe de la grandeur de réglage avec le signal numérique de profondeur relative.

15. Corps mobile sous-marin selon la revendication 14, **caractérisé en ce qu'**un sonar actif (19) comprenant un dispositif d'émission et de réception (191) aligné sur l'axe du corps est disposé à l'avant du corps mobile sous-marin (10), que le sonar actif (19) effectue en permanence des sondages acoustiques par écho vers le fond de l'eau pendant la phase de descente verticale du corps mobile sous-marin (20) et détermine la distance momentanée entre le corps mobile sous-marin (10) et le fond de l'eau, qu'il est prévu un dispositif de mesure de profondeur, par exemple une boîte dynamométrique (28) qui mesure la profondeur momentanée du corps mobile sous-marin (10) et que le signal de distance du sonar actif (19) et le signal de profondeur du dispositif de mesure de la profondeur (28) sont acheminés à un élément calculateur (273), de préférence un comparateur à la sortie duquel peut être prélevé le signal numérique de profondeur relative.
